# EUROPEAN PATENT SPECIFICATION

(11) **EP 3 282 507 B1**
(45) Date of publication and mention of the grant of the patent: **06.10.2021**
(21) Application number: 16772186.9
(22) Date of filing: 10.03.2016
(51) Int. Cl.: C22C 19/03, H01M 4/38, C22C 19/00, C22F 1/02, C22F 1/10, C22C 28/00, C22F 1/00

(54) **HYDROGEN-OCCLUSION ALLOY, NEGATIVE ELECTRODE INCLUDING SAID HYDROGEN-OCCLUSION ALLOY, AND NICKEL-HYDROGEN SECONDARY BATTERY INCLUDING SAID NEGATIVE ELECTRODE**
WASSERSTOFFOKKLUSIONSLEGIERUNG, NEGATIVE ELEKTRODE MIT DER WASSERSTOFFOKKLUSIONSLEGIERUNG UND NICKEL-WASSERSTOFFSEKUNDÄRBATTERIE MIT DER NEGATIVEN ELEKTRODE
ALLIAGE À OCCLUSION D'HYDROGÈNE, ÉLECTRODE NÉGATIVE COMPRENANT LEDIT ALLIAGE À OCCLUSION D'HYDROGÈNE, ET BATTERIE RECHARGEABLE AU NICKEL-HYDROGÈNE COMPRENANT LADITE ÉLECTRODE NÉGATIVE

(30) Priority: 27.03.2015 JP 2015066581
(43) Date of publication of application: 14.02.2018
(73) Proprietor: FDK Corporation, Tokyo 108-8212 (JP)
(72) Inventor: ISHIDA, Jun, Tokyo 108-8212 (JP); KIHARA, Masaru, Tokyo 108-8212 (JP); SAGUCHI, Akira, Tokyo 108-8212 (JP); SHINGAI, Yusuke, Tokyo 108-8212 (JP); KAI, Takuya, Tokyo 108-8212 (JP); KAJIWARA, Takeshi, Tokyo 108-8212 (JP)
(74) Representative: Epping - Hermann - Fischer
(86) International application number: PCT/JP2016/057638
(87) International publication number: WO 2016/158302

(56) References cited:
- EP-A1- 2 690 690
- EP-A1- 3 128 584
- WO-A1-2015/151704
- JP-A- 2003 096 532
- JP-A- 2007 087 722
- JP-A- 2014 146 557
- US-A1- 2007 065 722
- US-A1- 2007 158 001
- US-A1- 2009 155 688
- US-A1- 2011 052 983

## Description

### Technical Field

The present invention relates to a hydrogen storage alloy, a negative electrode using the hydrogen storage alloy, and a nickel-hydrogen secondary battery using the negative electrode.

### Background Art

Nickel-hydrogen secondary batteries have been used for a variety of purposes such as various electronic devices, electric devices and hybrid electric vehicles, because of having a high capacity and a good environmental safety compared to nickel-cadmium secondary batteries.

A hydrogen storage alloy to be used in a negative electrode of the nickel-hydrogen secondary battery is a material that stores and releases hydrogen, and is one of important constituent materials in the nickel-hydrogen secondary battery. As such a hydrogen storage alloy, for example, there are generally used a LaNi₅ hydrogen storage alloy that is a rare earth element-Ni hydrogen storage alloy having a CaCu₅ type crystal as a main phase and a hydrogen storage alloy having a Laves-phase crystal containing Ti, Zr, V and Ni as a main phase. Further, in recent years, for enhancing the hydrogen storage capacity of the hydrogen storage alloy, there has been proposed a rare earth element-Mg-Ni hydrogen storage alloy having a composition in which Mg is substituted for some of the rare earth element of the rare earth element-Ni hydrogen storage alloy. The rare earth element-Mg-Ni hydrogen storage alloy can store a large amount of hydrogen gas, compared to conventional rare earth element-Ni hydrogen storage alloy (see Patent Document 1).

Generally, in electronic devices and the like using a secondary battery as a power source, the remaining capacity of the battery is displayed in consideration of the convenience for a user.

For example, a method for detecting the remaining capacity of the battery is shown as follows. That is, in the battery, the voltage decreases when the remaining capacity decreases, and therefore, it is general to adopt a method of detecting the remaining capacity of the battery by detecting the change in the voltage. In detail, the remaining capacity of the battery is detected from the relation between the depth of discharge (hereinafter, referred to as DOD), which is the residual capacity of the battery, and the battery voltage. Here, the DOD is a value resulting from expressing in percentage the ratio of discharge amount to the nominal capacity of the battery. As the battery voltage, the voltage when electric current does not flow is generally used, but the voltage at the time of charge and discharge is used in some cases. For example, a reference value V1 of the battery voltage when the DOD is 25% and a reference value V2 of the battery voltage when the DOD is 75% are previously set. Then, the measured value of the battery voltage is compared to the reference values V1 and V2. When the measured value of the battery voltage is around the reference value V1, it can be judged that the remaining capacity is sufficient, and when the measured value of the battery voltage is around the reference value V2, it can be judged that the remaining capacity is small. In the case of this method, the detection of the remaining capacity of the battery becomes easier as the difference between the reference value V1 and the reference value V2 becomes larger.

By the way, when the nickel-hydrogen secondary battery having the negative electrode containing the conventional hydrogen storage alloy is used in a device, the voltage is stable until just before the running out of the remaining capacity. That is, the difference between the reference value V1 and the reference value V2 is relatively small. Therefore, there is a problem in that it is difficult to detect the remaining capacity of the battery based on the measured battery voltage, compared to other batteries such as a lead battery and a lithium-ion battery. This is because in the conventional hydrogen storage alloy, a so-called plateau region between a hydrogen solid solution region and a hydride region is nearly flat in a hydrogen pressure-hydrogen storage amountisothermal characteristic diagram (PCT characteristic diagram) indicating an equilibrium reaction of the hydrogen storage alloy and hydrogen, that is, a nearly constant equilibrium hydrogen pressure is indicated. When the plateau region is nearly flat in this way, the slope of a discharge curve indicating the change in the battery voltage with respect to the DOD is small, and accordingly, the difference between the reference value V1 and the reference value V2 is small. Therefore, the detection of the remaining capacity is difficult.

As a measure for improving the difficulty of the detection of the remaining capacity, it is conceivable to use a hydrogen storage alloy that has an extremely low plateau property and by which the value shifts at a large slope from the discharge start stage to the end stage and the plateau region hardly exists in the PCT characteristic diagram, such that the voltage gradually changes. In this case, the voltage changes from the discharge start stage to the end stage, and the discharge voltage difference (the difference between V1 and V2) is large. Therefore, the detection of the remaining capacity of the battery is easy.

By the way, such a hydrogen storage alloy having a low plateau property is an alloy formed by aggregating multiple kinds of hydrogen storage alloys that are different in equilibrium pressure. That is, in the alloy, multiple kinds of hydrogen storage alloys that are different in composition from one another are contained. In such a hydrogen storage alloy, the volume expansion at the time of hydrogen storage occurs individually for each composition, depending on the equilibrium pressure. Therefore, a local concentration of stress occurs, and a crack is easily produced as the whole of the hydrogen storage alloy. When the crack is produced in this way, the hydrogen storage alloy produces fine powders and produces many newly formed surfaces on the alloy. Then, by the reaction of the newly formed surfaces and the electrolyte, the electrode is needlessly consumed. As a result, the charge and discharge of the battery becomes impossible, and therefore, the battery using such a hydrogen storage alloy is short in life.

For solving such a problem of the hydrogen storage alloy having a low plateau property, there has been an alkaline secondary battery including a negative electrode containing two kinds of hydrogen storage alloys of a first hydrogen storage alloy and a second hydrogen storage alloy that each has high plateau properties and that have different hydrogen equilibrium pressures from each other (see Patent Document 2). In the case of Patent Document 2, the two kinds of hydrogen storage alloys exist separately in the negative electrode, and therefore, a crack is hardly produced, unlike the above hydrogen storage alloy having a low plateau property. Furthermore, voltages corresponding to the hydrogen equilibrium pressures of the respective alloys are generated, and therefore, the detection of the remaining capacity becomes easy by providing a large difference as a difference in the value of the hydrogen equilibrium pressure between the first hydrogen storage alloy and the second hydrogen storage alloy.

EP 3 128 584 A1 is prior art according to Art. 54(3) EPC and discloses a nickel hydrogen secondary battery comprising a container and an electrode group accommodated in the container in a sealed state together with an alkaline electrolyte, wherein the electrode group comprises a positive electrode and a negative electrode having a separator sandwiched therebetween, the alkaline electrolyte comprises NaOH as the main solute, and the negative electrode comprises a hydrogen storage alloy having a composition represented by a general formula: Ln₁₋ₓMgₓNi_{y-z}M_{z}, wherein Ln is at least one element selected from the group consisting of Sc, Y, La, Ce, Pr, Nd, Pm, Sm, Eu, Gd, Tb, Dy, Ho, Er, Tm, Yb, Lu and Zr; M is at least one element selected from the group consisting of V, Nb, Ta, Cr, Mo, Fe, Ga, Zn, Sn, In, Cu, Al, Si, P, and B; subscripts x, y and z satisfy the following relations, respectively: 0≤x≤0.05, 3.3≤y≤3.6, and 0≤z≤0.50; and the content of La in Ln is 25% or less. The document further discloses the following compositions disclaimed from claim 1: (La_{0.20}Sm_{0.80}) ₀.₉₉Mg_{0.01}Ni_{3.25}Al_{0.25} (Example 4), (Sm₁.₀₀) ₀.₉₉Mg₀.₀₁Ni₃.₂₅Al₀.₂₅ (Example 7) . All of these samples have been heat treated at 1000°C under argon.

US 2007/065722 A1 disclose an alkaline storage cell has a positive electrode, a negative electrode containing a hydrogen storage alloy, and an alkaline electrolyte. The hydrogen storage alloy has a composition expressed by a general expression: ( (PrNd)_{α}Ln_{1-α}) _{1-β}Mg_{β}Ni_{γ-δ-ε}Al_{δ}T_{ε}, where Ln represents at least one element chosen from a group consisting of La, Ce, etc., T represents at least one element chosen from a group consisting of V, Nb, etc., and subscripts α, β, γ, δ and ε represent numerical values which satisfy 0.7<α, 0.05<β<0.15, 3.0≦_{Y≦}4.2, 0.15≦5≦0.30 and 0≦ε≦0.20. D2 discloses in Comp. Example 2 the composition (La₀.₁₀Ce₀.₀₅Pr₀.₃₅Nd₀.₅₀)₀.₉₇Mg₀.₀₃Ni₃.₂₀Al₀.₂₂.

US 2009/155688 A1 discloses an alkaline storage cell comprising a positive electrode; a separator;
an electrolyte; and a negative electrode containing a rare earth―Mg—Ni hydrogen storage alloy, the rare earth―Mg—Ni hydrogen storage alloy having a composition expressed by a general formula: (A_{χ}Ln_{1-α})_{1-β}Mg_{β}Ni_{γ-δ-ε}Al_{δ}T_{ε} wherein A represents one or more elements selected from the group consisting of Pr, Nd, Sm and Gd and including at least Sm, Ln represents at least one element selected from the group consisting of La, Ce, Pm, Eu, Tb, Dy, Ho, Er, Tm, Yb, Lu, Ca, Sr, Sc, Y, Ti, Zr and Hf, T represents at least one element selected from the group consisting of V, Nb, Ta, Cr, Mo, Mn, Fe, Co, Zn, Ga, Sn, In, Cu, Si, P and B, and subscripts α, β, γ, δ and ε represent numerical values which respectively satisfy 0.4≦α, 0.05<β<0.15, 3.0≦_{Y}≦4.2, 0.15≦5≦0.30 and 0≦ε≦0.20. D3 discloses in Comp. Example 3 the composition (La₀.₂₀Nd₀.₄₀Sm₀.₄₀)₀.₉₇Mg₀.₀₃Ni₃.₂₀Al₀._{22•}

### Prior Art Document

### Patent Document

Patent Document 1: Japanese Patent Laid-Open No. 11-323469
Patent Document 2: Japanese Patent Laid-Open No. 2009-004255

### Summary of the Invention

### Problems to be solved by the Invention

However, in the case of Patent Document 2, there is a problem described as follows.

As described above, in the hydrogen storage alloy in Paten Document 2, the first hydrogen storage alloy and the second hydrogen storage alloy have different hydrogen equilibrium pressures. That is, a hydrogen storage alloy to function on a low-pressure side and a hydrogen storage alloy to function on a high-pressure side exist. For example, when the nickel-hydrogen secondary battery is charged, only the hydrogen storage alloy on the low-pressure side is initially used, and hydrogen is stored. After the storage of hydrogen in the hydrogen storage alloy on the low-pressure side is finished, only the hydrogen storage alloy on the high-pressure side is used, and hydrogen is stored. Here, in the case of the nickel-hydrogen secondary battery, usually, the capacity of the negative electrode is set so as to be larger than the capacity of the positive electrode. Therefore, in the charge, after the storage of hydrogen is switched from the hydrogen storage alloy on the low-pressure side to the hydrogen storage alloy on the high-pressure side, the positive electrode becomes a full charge state before the hydrogen storage capacity of the hydrogen storage alloy on the high-pressure side reaches the limit. On the other hand, in the discharge, hydrogen starts to be released from the hydrogen storage alloy on the high-pressure side, in which hydrogen has been incompletely stored, and after the release of hydrogen from the hydrogen storage alloy on the high-pressure side becomes impossible, the hydrogen in the hydrogen storage alloy on the low-pressure side is released. Then, the release of hydrogen from the hydrogen storage alloy on the low-pressure side is continued until the discharge of the positive electrode becomes impossible. Thus, in the charge and the discharge, the ratio of the use of the hydrogen storage alloy on the low-pressure side is higher than the ratio of the use of the hydrogen storage alloy on the high-pressure side. Therefore, the load on the hydrogen storage alloy on the low-pressure side is larger than that on the hydrogen storage alloy on the high-pressure side. Accordingly, the hydrogen storage alloy on the low-pressure side easily cracks, and produces fine powders early. When fine powders are produced in this way, many newly formed surfaces on the hydrogen storage alloy on the low-pressure side, which are produced due to the fine powder production, react with the electrolyte, so that the electrolyte is consumed. Therefore, a so-called dry out occurs, and the life of the battery shortens.

That is, even by the nickel-hydrogen secondary battery using the hydrogen storage alloy in Patent Document 2, the life of the battery is not sufficiently improved, and both a long cycle life and an easy detection of the remaining capacity of the battery have not been sufficiently achieved yet.

Hence, it is demanded to develop a nickel-hydrogen secondary battery in which the cycle life characteristic is improved and the remaining capacity of the battery is easily detected.

The present invention has been made based on the above circumstances, and an object thereof is to provide a hydrogen storage alloy that makes it possible to easily detect the remaining capacity of a nickel-hydrogen secondary battery and that contributes to the achievement of the enhancement of the cycle life characteristic, a negative electrode using the hydrogen storage alloy, and a nickel-hydrogen secondary battery using the negative electrode.

### Means for Solving the Problems

The present invention provides a hydrogen storage alloy according to claim 1, a negative electrode according to claim 5 comprising the hydrogen storage alloy and a nickel-hydrogen secondary battery according to claim 6 comprising the negative electrode. Preferred embodiments are set forth in the subclaims.

### Advantageous Effects of the Invention

The hydrogen storage alloy in the present invention has the first plateau region and the second plateau region in the PCT characteristic diagram at 80°C. Therefore, in the nickel-hydrogen secondary battery that uses the negative electrode containing the hydrogen storage alloy in the present invention, it is possible to make a voltage change between the discharge start stage and the discharge end stage, and to easily detect the remaining capacity of the battery. Furthermore, unlike the conventional hydrogen storage alloy, the hydrogen storage alloy in the present invention does not use multiple kinds of hydrogen storage alloys for realizing an aspect having two or more steps in the plateau region. Therefore, the progression of the fine powder production due to the crack of only a part of the hydrogen storage alloy in connection with the charge and discharge of the battery hardly occurs. Accordingly, the nickel-hydrogen secondary battery that uses the negative electrode containing the hydrogen storage alloy in the present invention hardly causes the dry out, and has a good cycle life characteristic.

Thus, the present invention can provide the hydrogen storage alloy that makes it possible to easily detect the remaining capacity of the nickel-hydrogen secondary battery and that contributes to the achievement of the enhancement of the cycle life characteristic, the negative electrode using the hydrogen storage alloy, and the nickel-hydrogen secondary battery using the negative electrode.

### Brief Description of the Drawings

FIG. 1 is a perspective view that shows a nickel-hydrogen secondary battery according to an embodiment of the present invention while a part is fractured.
FIG. 2 is a graph that shows a PCT characteristic diagram of a hydrogen storage alloy according to Example 4.

### Mode for Carrying out the Invention

Hereinafter, a nickel-hydrogen secondary battery (hereinafter, referred to as merely a battery) 2 according to the present invention will be described with reference to the drawings.

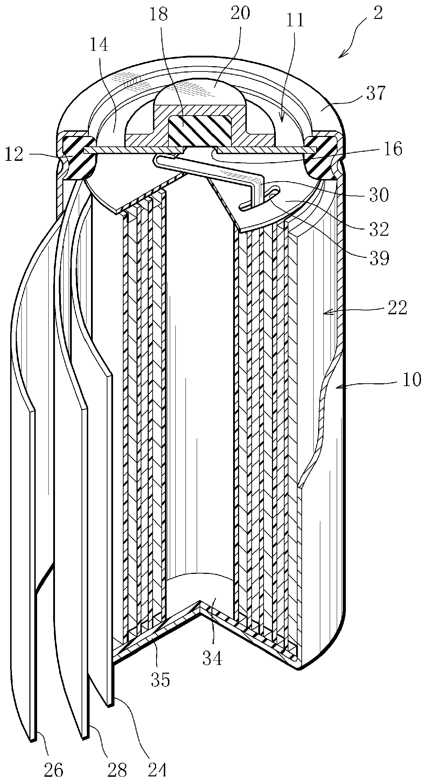

The battery 2 to which the present invention is applied is not particularly limited. For example, a case where the present invention is applied to an AA-size cylindrical battery 2 shown in FIG. 1 will be described as an example.

As shown in FIG. 1, the battery 2 includes an outer can 10 having a bottomed cylindrical shape in which an upper end is opened. The outer can 10 has a conductivity, and a bottom wall 35 thereof functions as a negative electrode terminal. To the opening of the outer can 10, a sealing body 11 is fixed. The sealing body 11, which includes a lid plate 14 and a positive electrode terminal 20, seals the outer can 10 and provides the positive electrode terminal 20. The lid plate 14 is a disk-shaped member having a conductivity. In the opening of the outer can 10, a lid plate 14 and a ring-shaped insulating packing 12 surrounding the lid plate 14 are disposed. The insulating packing 12 is fixed to an opening rim 37 of the outer cam 10 by the calking of the opening rim 37 of the outer can 10. That is, the lid plate 14 and the insulating packing 12 closes the opening of the outer can 10 in an airtight manner, in cooperation with each other.

Here, the lid plate 14 has a central through-hole 16 at the center, and a rubber valve body 18 to occlude the central through-hole 16 is disposed on an outer surface of the lid plate 14. Further, with the outer surface of the lid plate 14, the metal positive electrode terminal 20 having a cylindrical shape with a flange is electrically connected so as to cover the valve body 18. The positive electrode terminal 20 presses the valve body 18 toward the lid plate 14. On the positive electrode terminal 20, an unillustrated venting hole is opened.

At the normal time, the central through-hole 16 is closed in an airtight manner, by the valve body 18. On the other hand, when gas is generated in the outer can 10 and the inner pressure rises, the valve body 18 is compressed by the inner pressure, to open the central through-hole 16. As a result, the gas is released from the outer can 10 to the exterior through the central through-hole 16 and the venting hole (not illustrated) of the positive electrode terminal 20. That is, the central through-hole 16, the valve body 18 and the positive electrode terminal 20 form a safety valve for the battery.

In the outer can 10, an electrode group 22 is placed. The electrode group 22 includes a positive electrode 24, a negative electrode 26 and a separator 28, each of which has a belt shape, and they are spirally wound while the separator 28 is interposed between the positive electrode 24 and the negative electrode 26. That is, the positive electrode 24 and the negative electrode 26 are mutually overlapped with the separator 28 therebetween. The outermost circumference of the electrode group 22 is formed by a part (outermost circumference part) of the negative electrode 26, and contacts with the inner circumference wall of the outer can 10. That is, the negative electrode 26 and the outer can 10 are electrically connected with each other.

Then, in the outer can 10, a positive electrode lead 30 is disposed between one end of the electrode group 22 and the lid plate 14. In detail, one end of the positive electrode lead 30 is connected with the positive electrode 24, and the other end is connected with the lid plate 14. Accordingly, the positive electrode terminal 20 and the positive electrode 24 are electrically connected with each other through the positive electrode lead 30 and the lid plate 14. Here, a circular upper insulating member 32 is disposed between the lid plate 14 and the electrode group 22, and the positive electrode lead 30 extends while passing through a slit 39 provided on the upper insulating member 32. Further, a circular lower insulating member 34 is disposed between the electrode group 22 and the bottom of the outer can 10.

Furthermore, a predetermined amount of alkaline electrolyte (not illustrated) is put into the outer can 10. The alkaline electrolyte is contained in the electrode group 22, and promotes the charge/discharge reaction between the positive electrode 24 and the negative electrode 26. As the alkaline electrolyte, it is preferable to use an alkaline electrolyte containing KOH, NaOH or LiOH as a solute.

As the material of the separator 28, for example, materials in which a hydrophilic functional group is added to a non-woven fabric made of a polyamide fiber or a non-woven fabric made of a polyolefin fiber of polyethylene, polypropylene or the like can be used. Specifically, it is preferable to use a non-woven fabric mainly composed of a polyolefin fiber in which a sulfone group is added by a sulfonation treatment. Here, the sulfone group is added by treating a non-woven fabric using a sulfate groupcontaining acid such as sulfuric acid or fuming sulfate acid. A battery that uses the separator containing such a fiber with the sulfone group exerts a good self-discharge characteristic.

The positive electrode 24 includes a conductive positive electrode base body having a porous structure, and a positive electrode mixture held in pores of the positive electrode base body.

As the positive electrode base body, for example, a nickel-plated metal body in a net-like, sponge-like or fiber-like fashion, or a foamed nickel (nickel foam) can be used.

The positive electrode mixture contains a positive electrode active material particle, a conductive material, a positive electrode additive agent and a binding agent. The binding agent serves to bind the positive electrode active material particle, the conductive material and the positive electrode additive agent, and therewith to bind the positive electrode mixture to the positive electrode base body. As the binding agent, for example, carboxymethyl cellulose, methyl cellulose, PTFE (polytetrafluoroethylene) dispersion, HPC (hydroxypropyl cellulose) dispersion, or the like can be used.

The positive electrode active material particle is a nickel hydroxide particle or a high-order nickel hydroxide particle. It is preferable that at least one kind of zinc, magnesium and cobalt be dissolved in these nickel hydroxide particles.

As the conductive material, for example, one kind or two or more kinds selected from the group consisting of cobalt compounds such as cobalt oxide (CoO) and cobalt hydroxide (Co(OH)₂) , and cobalt (Co). The conductive material is added in the positive electrode mixture as necessary, and as the form of the addition, may be contained in the positive electrode mixture in a form of coating the surface of the positive electrode active material, other than a powder form.

The positive electrode additive agent is added for improving the characteristic of the positive electrode, and for example, yttrium oxide, zinc oxide or the like can be used.

For example, the positive electrode active material particle can be produced as follows.

First, a nickel sulfate aqueous solution is prepared. A sodium hydride aqueous solution is gradually added in the nickel sulfate aqueous solution, and they are reacted, so that a nickel hydride particle is deposited. Here, in the case where zinc, magnesium and cobalt are dissolved in the nickel hydride particle, nickel sulfate, zinc sulfate, magnesium sulfate and cobalt sulfate are weighted such that a predetermined composition is obtained, and a mixed aqueous solution composed of them is prepared. While the obtained mixed aqueous solution is stirred, the sodium hydride aqueous solution is gradually added in the mixed aqueous solution, and they are reacted. Thereby, a positive electrode active material particle that is mainly composed of nickel hydride and in which zinc, magnesium and cobalt are dissolved is deposited.

For example, the positive electrode 24 can be produced as follows.

First, a positive electrode mixture paste containing a positive electrode active material powder composed of the positive electrode active material particle obtained as described above, the conductive material, the positive electrode additive agent, water and the binding agent is prepared. The obtained positive electrode mixture paste is filled, for example, into foamed nickel (nickel foam), and is dried. After the drying, the foamed nickel (nickel foam) filled with the nickel hydride particle and the like is rolled, and then is cut. Thereby, the positive electrode 24 supporting the positive electrode mixture is made.

Next, the negative electrode 26 will be described.

The negative electrode 26 includes a conductive negative electrode base plate (core body) having a belt shape, and the negative electrode base plate holds a negative electrode mixture.

The negative electrode base plate is composed of a sheet-shaped metal material on which through-holes are distributed, and for example, a punched metal sheet, or a sintered base plate resulting from molding and sintering metal powders can be used. The negative electrode mixture is filled into the through-holes of the negative electrode base plate, and in addition, is held on both surfaces of the negative electrode base plate in a layer shape.

The negative electrode mixture contains a hydrogen storage alloy particle that can store and release hydrogen as a negative electrode active material, a conductive material and a binding agent. The binding agent serves to bind a hydrogen storage alloy particle, a negative electrode additive agent and the conductive material to each other, and therewith, to bind the negative electrode mixture to the negative electrode base plate. Here, as the binding agent, a hydrophilic or hydrophobic polymer or the like can be used, and as the conductive material, carbon black or graphite can be used. The negative electrode additive agent may be added as necessary.

As the hydrogen storage alloy in the hydrogen storage alloy particle, a hydrogen storage alloy described below can be used.

First, the hydrogen storage alloy in the present invention has a crystal structure in which an AB₂ type unit and an AB₅ type unit are laminated. In detail, a so-called super lattice structure having an A₂B₇ type structure or an A₅B₁₉ type structure in which the AB₂ type unit and the AB₅ type unit are laminated is formed. The hydrogen storage alloy in the present invention is a single kind of hydrogen storage alloy in which the crystal structure is such a super lattice structure.

In the hydrogen storage alloy in the present invention, a hydrogen pressure-hydrogen storage amountisothermal characteristic diagram (hereinafter, referred to as a PCT characteristic diagram) indicating the relation between the hydrogen storage amount and the hydrogen pressure at 80°C includes a hydrogen solid solution region in which the hydrogen pressure changes at a first slope with respect to the change in the hydrogen storage amount, a hydride region in which the hydrogen pressure changes at a second slope with respect to the change in the hydrogen storage amount, and a plateau region that is positioned between the hydrogen solid solution region and the hydride region and in which the hydrogen pressure changes at a smaller slope than the above first slope and the above second slope with respect to the change in the hydrogen storage amount. In the plateau region, at least two steps exist.

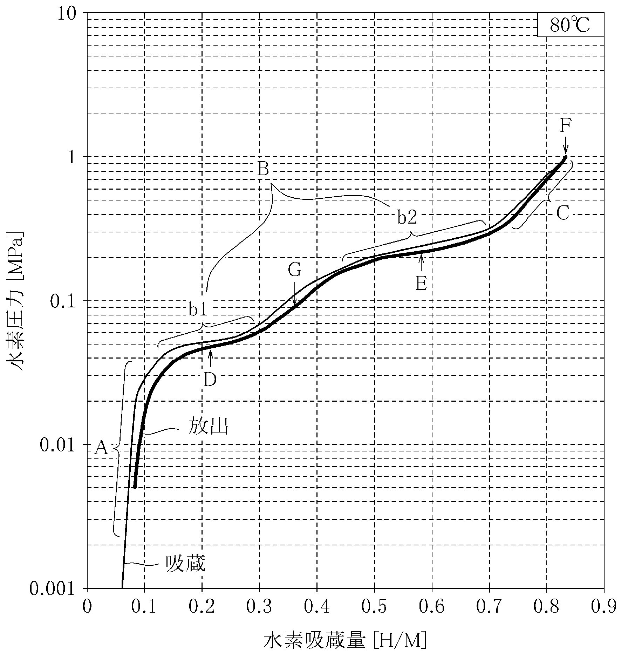

Here, the plateau region will be described with reference to FIG. 2 that shows a PCT characteristic diagram of a hydrogen storage alloy in Example 4 described later. When the hydrogen storage alloy is placed under a constanttemperature atmosphere, the hydrogen pressure is gradually raised, the relation with the hydrogen storage amount is evaluated and a PCT characteristic diagram is drawn, the hydrogen storage amount gradually increases with the rise in the hydrogen pressure. That is, as shown in a portion denoted by A in FIG. 2, the hydrogen pressure changes at the first slope with respect to the change in the hydrogen storage amount. At this time, the solid solution of hydrogen progresses in the hydrogen storage alloy. This region is a hydrogen solid solution region A. When the hydrogen pressure is further raised, the hydrogen storage amount drastically increases at a certain pressure. That is, in the PCT characteristic diagram, with respect to the change in the hydrogen storage amount, the hydrogen pressure shifts at a smaller slope than the first slope, namely, in a nearly flat manner. This region is a plateau region B, and the formation of hydride progresses. In the plateau region B, both hydrogen solid solution and hydride exist. Thereafter, when the formation of hydride is completed, the hydrogen pressure rises again and transition to the hydride region. The hydride region is a portion denoted by C in FIG. 2. In the hydride region, with respect to the change in the hydrogen storage amount, the hydrogen pressure changes at the second slope, which is larger than the slope in the plateau region B. In the present invention, a hydrogen storage amount when the hydrogen pressure is 1 MPa is adopted as an effective hydrogen storage amount (a point denoted by F in FIG. 2). Here, a high pressure region in which the hydrogen pressure is exceeding 1 MPa is not suitable for the normal use of the nickel-hydrogen secondary battery, and therefore, in the nickel-hydrogen secondary battery, the hydrogen storage amount when the hydrogen pressure is 1 MPa is the maximal hydrogen storage amount of the hydrogen that can be effectively used. That is, the effective hydrogen storage amount means the maximal hydrogen storage amount in the range in which the hydrogen in the nickel-hydrogen secondary battery can be effectively used.

On the other hand, when hydrogen is released, in the PCT characteristic diagram, the shift is made in the reverse direction in nearly the same form as the PCT characteristic diagram when hydrogen is stored, although there is some hysteresis (the pressure difference between the storage and release of hydrogen). That is, while the hydrogen storage amount decreases from the effective hydrogen storage amount at nearly the same slope as the second slope, the equilibrium hydrogen pressure decreases and thereafter enters the plateau region B. In the plateau region B, the shift in the PCT characteristic diagram is made at a smaller slope than the second slope, and hydrogen is released so that the hydrogen storage amount decreases. Then, when hydride is reduced, hydrogen is released at nearly the same slope as the first slope, in the hydrogen solid solution region A.

In the present invention, as the above plateau region B, at least two steps exist between the hydrogen solid solution region A and the hydride region C. That is, the plateau region B includes a first plateau region b1 and a second plateau region b2. In the battery that uses the hydrogen storage alloy having multiple plateau regions as the plateau region B in this way, battery voltages corresponding to hydrogen pressures for the respective plateau regions are generated. That is, it is possible to generate battery voltages that are different from each other between the start stage and end stage of the discharge.

Furthermore, in the hydrogen storage alloy in the present invention, when Pd1 is defined as a hydrogen pressure when hydrogen is stored by 0.25 times (a D point) the effective hydrogen storage amount F in the PCT characteristic diagram when hydrogen is released and Pd2 is defined as a hydrogen pressure when hydrogen is stored by 0.70 times (an E point) the effective hydrogen storage amount F, Pd1 is included in the first plateau region and Pd2 is included in the second plateau region. Further, Pd1 and Pd2 satisfy a relation of 0.6 ≤ log₁₀ (Pd2/Pd1) .

The above log₁₀(Pd2/Pd1) indicates the difference between Pd1 and Pd2. As the value of log₁₀(Pd2/Pd1) that is difference between Pd1 and Pd2 becomes larger, the difference between the battery voltage at Pd1 and the battery voltage at Pd2 becomes larger, and the detection of the remaining capacity of the battery becomes easier. On the other hand, when log₁₀(Pd2/Pd1) is less than 0.6, the difference in the battery voltage of the battery is small, and the detection of the remaining capacity of the battery is difficult. Generally, it is known that the battery voltage rises by about 30 mV when the hydrogen pressure rises by a single digit ("Hydrogen Storage Alloy-Fundamentals and Frontier Technologies" published by NTS).

Here, in the nickel-hydrogen secondary battery, when the hydrogen pressure is too low and is below 0.01 MPa, the discharge is difficult, and when the hydrogen pressure is too high and is exceeding 1 MPa, the charge is difficult. Therefore, for the function as the nickel-hydrogen secondary battery, the lower limit of Pd1 is 0.01 MPa, and the upper limit of Pd2 is 1 MPa. Accordingly, it is preferable that log₁₀(Pd2/Pd1) ≤ 2 be substantially satisfied. Further, the hydrogen pressure changes depending on temperature, and therefore, for using the nickel-hydrogen secondary battery in a wide temperature range, it is preferable that the hydrogen pressure be 0.03-0.3 MPa. Therefore, it is preferable that log₁₀(Pd2/Pd1) ≤ 1 be satisfied.

Here, it is preferable that the first plateau region including Pd1 positioned on the low-pressure side and the second plateau region including Pd2 positioned on the high-pressure side.

Further, it is preferable that the plateau region include two steps. By using the hydrogen storage alloy having the plateau region with two steps, it is possible to make a change in the battery voltage from the discharge start stage to the discharge end stage for the battery, resulting in an easy detection of the remaining capacity of the battery.

Furthermore, for increasing the change in the battery voltage over the whole range of the discharge, it is preferable that a middle portion between the first plateau region (b1 in FIG. 2) at the first step and the second plateau region (b2 in FIG. 2) at the second step, that is, an inflection point (a G point in FIG. 2) exist nearly at the middle of the effective hydrogen storage amount (an F point in FIG. 2). Specifically, the inflection point exists at 0.35-0.50 times the effective hydrogen storage amount.

The hydrogen storage alloy having the plateau region with two steps exerts the effect of the suppression of fine powder production, in addition to the above effect of the enlargement of the width of the difference in the battery voltage during the discharge. The effect of the suppression of the fine powder production will be described below in detail.

First, in the crystal structure, the hydrogen storage alloy having the plateau region with two steps includes a hydrogen storage site related to the first plateau region at the first step and a hydrogen storage site related to the second plateau region at the second step. Here, the hydrogen storage site is a gap in the crystal structure in which hydrogen is stored. By the storage of hydrogen in the hydrogen storage site, the battery is charged, and by the release of hydrogen from the hydrogen storage site, the battery is discharged.

At the time of the charge, the second plateau region is not involved in the charge, until the hydrogen storage site related to the first plateau region is filled and the charge associated with the first plateau region is completed. That is, at the start stage of the charge, hydrogen is not stored in the hydrogen storage site related to the second plateau region. Then, after the charge associated with the first plateau region is completed, hydrogen is stored in the hydrogen storage site related to the second plateau region, and the charge associated with the second plateau region is started.

On the other hand, at the time of the discharge, similarly, the first plateau region is not involved in the discharge, until the release of the hydrogen in the hydrogen storage site related to the second plateau region is completed and the discharge associated with the second plateau region is completed. That is, at the start stage of the discharge, hydrogen is not released from the hydrogen storage site related to the first plateau region. Then, after the discharge associated with the second plateau region is completed, hydrogen is released from the hydrogen storage site related to the first plateau region, and the discharge associated with the first plateau region is started.

Therefore, a drastic progression of the volume change such as the expansion or contraction due to hydrogenation or dehydrogenation hardly occurs, and the crack of the hydrogen storage alloy hardly occurs. Therefore, the fine powder production of the hydrogen storage alloy is suppressed. Since the fine powder production of the hydrogen storage alloy is suppressed in this way, the production of many newly formed surfaces of the hydrogen storage alloy is suppressed. When many newly formed surfaces of the hydrogen storage alloy are not produced, the reaction of the hydrogen storage alloy and the electrolyte is kept in an appropriate condition, and therefore, the occurrence of the so-called dry out, which is caused by an excessive consumption of the electrolyte, is suppressed. As a result, the nickel-hydrogen secondary battery using the hydrogen storage alloy in the present invention has a long life.

Usually, when there simultaneously exist a portion partially filled with hydrogen and a portion not filled with hydrogen in the hydrogen storage alloy, it is thought that the stress due to the difference in expansion rate in the hydrogen storage alloy increases, and it is estimated that the fine powder production and the distortion of the crystal structure easily occur. However, the hydrogen storage alloy having an A₂B₇ type structure or A₅B₁₉ type structure in which the AB₂ unit and the AB₅ unit are laminated in the present invention is distinctly divided into a portion that is easy to be hydrogenated and a portion that is hard to be hydrogenated in response to the change in the hydrogen pressure, on a unit basis, and therefore, is hardly influenced by the expansion or contraction due to hydrogenation or dehydrogenation. Therefore, it is possible to obtain a hydrogen storage alloy that suppresses the fine powder production as described above and that has a good durability characteristic.

Further, as the hydrogen storage alloy in the present invention, according to the present inventiona rare earth element-Mg-Ni hydrogen storage alloy having a composition expressed by the following general formula (I) is used.

Ln₁₋ₓMgₓNi_{y-z-α}Al_{z}M_{α} ... (I)

In the general formula (I), Ln represents at least one element selected from the group consisting of Zr and rare earth elements, M represents at least one element selected from the group consisting of V, Nb, Ta, Cr, Mo, Fe, Ga, Zn, Sn, In, Cu, Si, P and B, and suffixes x, y, z and α satisfy relations of 0 ≤ x < 0.03, 3.3 ≤ y ≤ 3.6, 0.2 ≤ z ≤ 0.4 and 0 < α ≤ 0.1, respectively, excluding compositions (La_{0.20}SM_{0.80}) _{0.99}Mg₀.₀₁Ni_{3.25}Al_{0.25}, and (Sm₁.₀₀) _{0.99}Mg₀.₀₁Ni₃.₂₅Al₀._{25.} The above rare earth element, specifically, is Sc, Y, La, Ce, Pr, Nd, Pm, Sm, Eu, Gd, Tb, Dy, Ho, Er, Tm, Yb or Lu.

According to the present invention, such a composition is selected. Thereby, it is possible to obtain the hydrogen storage alloy having the plateau region with two steps.

Here, when x representing the Mg amount is 0.03 or more, the amount is not suitable because the pressure difference between the plateau region on the high-pressure side and the plateau region on the low-pressure side is small. When the value of y is out of the above range, the value is not suitable because the plateau region is not clear. When z representing the A1 amount is less than 0.2, the life of the battery is short, and when z is exceeding 0.4, the hydrogen storage amount of the alloy is insufficient. Further, the additive element M can be selected within a range where the crystal structure in which the AB₂ unit and the AB₅ unit are laminated is not broken. Specifically, when α representing the M amount is exceeding 0.1, there is a concern that the crystal structure in which the AB₂ unit and the AB₅ unit are laminated is broken.

In the hydrogen storage alloy associated with the general formula (I), Ln and Mg are the A component, and Ni, A1 and M are the B component.

The hydrogen storage alloy that forms the so-called super lattice structure having the A₂B₇ type structure or A₅B₁₉ type structure in which the AB₂ type unit and the AB₅ type unit are laminated has both the advantage that the storage and release of hydrogen is stable, which is a characteristic of the AB₅ type alloy, and the advantage that the storage amount of hydrogen is large, which is a characteristic of the AB₂ type alloy. Thereby, the hydrogen storage alloy according to the present invention has a good hydrogen storage capacity, and therefore, contributes to the increase in the capacity of the battery 2 to be obtained.

Next, for example, the above hydrogen storage alloy particle can be obtained in the following way.

First, metal raw materials are weighted and mixed such that a predetermined composition is obtained. The mixture is melted, for example, in an induction melting furnace, and then, an ingot is made by cooling. To the obtained ingot, a heat treatment is performed under an inert gas atmosphere at 900-1200°C for 5-24 hours. Thereafter, the ingot is cooled to room temperature, and is ground. Then, by screening, a hydrogen storage alloy particle having a desired particle diameter is obtained.

Further, for example, the negative electrode 26 can be produced in the following way.

First, a hydrogen storage alloy powder composed of the hydrogen storage alloy particle, the conductive material, the binding agent and water are mixed and kneaded, and thereby, a negative electrode mixture paste is prepared. The obtained negative electrode mixture paste is applied on the negative electrode base plate, and is dried. After the drying, the negative electrode base plate with the hydrogen storage alloy particle and the like is rolled and cut. Thereby, the negative electrode 26 is made.

The positive electrode 24 and negative electrode 26 made as described above are spirally wound while the separator 28 is interposed. Thereby, the electrode group 22 is formed.

The electrode group 22 made in this way is placed in the outer can 10. Subsequently, a predetermined amount of alkaline electrolyte is put into the outer can 10. Thereafter, the outer can 10 placing the electrode group 22 and the alkaline electrolyte therein is closed by the lid plate 14 including the positive electrode terminal 20, so that the battery 2 according to the present invention is obtained. The obtained battery 2 becomes a usable condition by an initial activation treatment.

### [Example]

### 1. Production of Battery

### (Example 1 (Reference))

### (1) Making of Hydrogen Storage Alloy and Negative Electrode

First, a rare earth component containing 20 mass% La and 80 mass% Sm was prepared. The obtained rare earth component, Mg, Ni and Al were weighted, and the mixture was prepared such that the molar ratio of them is a ratio of 0.99 : 0.01 : 3.25 : 0.25. The obtained mixture was melted in an induction melting furnace, and the hot metal was cast into a mold and was cooled to room temperature, so that an ingot of the hydrogen storage alloy was obtained. The composition analysis of a sample taken from the ingot was performed by a high-frequency plasma spectrometry (ICP). As a result, the composition of the hydrogen storage alloy was (La₀.₂₀SM₀.₈₀) ₀.₉₉Mg₀.₀₁Ni₃.₂₅Al₀.₂₅.

Next, to the ingot, a heat treatment was performed under an argon gas atmosphere at a temperature of 1000°C for 10 hours. Then, after the heat treatment, the ingot of the hydrogen storage alloy was cooled to room temperature, and was mechanically ground under the argon gas atmosphere, so that powders composed of the hydrogen storage alloy particle were obtained. The particle diameter of the obtained hydrogen storage alloy powder was measured using a laser diffraction/scatter type particle diameter distribution measuring apparatus. As a result, the volume mean diameter (MV) of the hydrogen storage alloy particle was 60 µm.

Furthermore, the hydrogenation characteristic evaluation of the obtained hydrogen storage alloy powder was performed by evaluating the relation between the hydrogen storage amount and the hydrogen pressure in the following procedure.

First, a sample for the hydrogenation characteristic evaluation was taken from the obtained hydrogen storage alloy powder. This sample was set in a PCT hydrogenation characteristic evaluation apparatus. Then, the sample was hydrogenated at a temperature condition of 80°C to the maximal hydrogen pressure 1 MPa, and then was dehydrogenated, and thereby, the sample was activated. Thereafter, for the sample, at a temperature condition of 80°C, the maximal hydrogen pressure was set to 1 MPa, and values of the hydrogen pressure and the hydrogen storage amount were plotted for obtaining the PCT characteristic diagram.

As a result, a PCT characteristic diagram having a plateau region with two steps was obtained. Here, in Table 2, the number of the steps of the plateau region is written as "Form of PCT Characteristic Diagram". In the obtained PCT characteristic diagram, the inflection point, which was the border between a plateau region (first plateau region) at the first step and a plateau region (second plateau region) at the second step, appeared at a portion of 0.45 times the effective hydrogen storage amount. Further, the hydrogen pressure Pd1 at 0.25 times the effective hydrogen storage amount that was positioned in the plateau region (first plateau region) at the first step and the hydrogen pressure Pd2 at 0.70 times the effective hydrogen storage amount that was positioned in the plateau region (second plateau region) at the second step were evaluated. As a result, Pd1 was 0.048 MPa, and Pd2 was 0.220 MPa. Then, log₁₀(Pd2/Pd1) evaluated from the results of Pd1 and Pd2 was 0.66. The values of Pd1, Pd2 and log₁₀(Pd2/Pd1) are shown in Table 2.

To 100 parts by mass of the obtained hydrogen storage alloy powder, 0.4 parts by mass of sodium polyacrylate, 0.1 parts by mass of carboxymethyl cellulose, 1.0 parts by mass of styrene-butadiene rubber (SBR) dispersion, 1.0 parts by mass of carbon black, and 30 parts by mass of water were mixed and kneaded, so that a paste of the negative electrode mixture was obtained.

The paste of the negative electrode mixture was applied evenly on both surfaces of an iron perforated plate as the negative electrode base plate, such that the thickness is uniform. The perforated plate had a thickness of 60 µm, and nickel plating had been performed on the surfaces.

After the drying of the paste, the perforated plate with the hydrogen storage alloy powder was further rolled, such that the alloy amount per volume was increased. Thereafter, the perforated plate was cut, so that the negative electrode 26 for AA size was obtained.

### (2) Making of Positive Electrode

Nickel sulfate, zinc sulfate, magnesium sulfate and cobalt sulfate were weighted such that the composition was 3 mass% zinc, 0.4 mass% magnesium and 1 mass% cobalt with respect to nickel. They were added in 1 N sodium hydroxide aqueous solution containing ammonium ions, and thereby, a mixed aqueous solution was prepared. While the obtained mixed aqueous solution was stirred, 10 N sodium hydroxide aqueous solution was gradually added in the mixed aqueous solution, and was reacted. During the reaction, pH was stabilized at 13-14. Thereby, a nickel hydroxide particle that was mainly composed of nickel hydroxide and in which zinc, magnesium and cobalt were dissolved was generated.

The obtained nickel hydroxide particle was washed in ten times its volume of pure water, three times, and then was dehydrated and dried. The obtained nickel hydroxide particle had a mean particle diameter of 10 µm and had a spherical shape.

Next, to 100 parts by mass of the positive electrode active material powder composed of the nickel hydroxide particle made in the above way, 10 parts by mass of cobalt hydroxide powder was mixed, and further, 0.5 parts by mass of yttrium oxide, 0.3 parts by mass of zinc oxide and 40 parts by mass of HPC dispersion solution were mixed, so that a positive electrode mixture paste was prepared. The positive electrode mixture paste was filled into a sheet-shaped foamed nickel (nickel foam) as the positive electrode base body. The foamed nickel filled with the positive electrode mixture paste was dried. Thereafter, the foamed nickel filled with the positive electrode mixture was rolled, and then was cut into a predetermined shape, so that the positive electrode 24 for AA size was obtained.

### (3) Assembly of Nickel-Hydrogen Secondary Battery

The obtained positive electrode 24 and negative electrode 26 were spirally wound while the separator 28 was interposed therebetween, so that the electrode group 22 was made. The separator 28 used for making the electrode group 22 was composed of a polypropylene fiber non-woven fabric to which a sulfonation treatment was performed, and the thickness was 0.1 mm (basis weight 53 g/m²).

Meanwhile, an alkaline electrolyte composed of an aqueous solution containing KOH, NaOH and LiOH was prepared. Here, in the alkaline electrolyte, KOH, NaOH and LiOH were contained at a ratio of KOH : NaOH : LiOH = 0.8 : 7.0 : 0.02.

Next, the above electrode group 22 was placed in the outer can 10 having a bottomed cylindrical shape, and a predetermined amount of the prepared alkaline electrolyte was put. Thereafter, the opening of the outer can 10 was occluded by the sealing body 11, and the AA-size nickel-hydrogen secondary battery 2 having a nominal capacity of 2000 mAh was assembled. Here, the nominal capacity was the discharge capacity of the battery when the battery was charged at 0.2 A for 16 hours and then was discharged at 0.4 A until the battery voltage became 1.0 V under an environment of a temperature of 25°C.

### (4) Initial Activation Treatment

An initial activation treatment was performed by repeating, five times, a charge/discharge operation of changing the battery 2 at a charge current 0.2 A for 16 hours and then discharging the battery 2 at a discharge current of 0.4 A until the battery voltage became 1.0 V under an environment of a temperature of 25°C. In this way, the battery 2 became the usable condition.

### (5) Measurement of Voltage Difference during Discharge

During the fifth discharge in the above initial activation treatment, the battery voltage when the ratio of the discharge capacity to the nominal capacity was 25% (DOD 25%) and the battery voltage when the ratio of the discharge capacity to the nominal capacity was 75% (DOD 75%) were measured, and the difference between the battery voltage when DOD was 25% and the battery voltage when DOD was 75% was evaluated. In Table 2, the result is shown as discharge voltage difference DOD25%-DOD75%. The detection of the remaining capacity of the battery becomes easier as the voltage difference during the discharge becomes larger.

### (Example 2 (Reference))

A nickel-hydrogen secondary battery was made in the same way as Example 1 (Reference), except that the composition of the hydrogen storage alloy was Sm₀.₉₉Mg₀.₀₁Ni₃.₂₅Al₀.₂₅ .

### (Example 3 (Reference))

A nickel-hydrogen secondary battery was made in the same way as Example 1 (Reference), except that the composition of the hydrogen storage alloy was Sm_{1.00}Ni_{3.23}Al_{0.27} .

### (Example 4)

A nickel-hydrogen secondary battery was made in the same way as Example 1 (Reference), except that the composition of the hydrogen storage alloy was (La₀.₂₀SM₀.₈₀)₀.₉₈Mg₀.₀₂Ni₃.₂₄Al₀.₂₅Cr₀.₀₁ .

Here, a PCT characteristic diagram of the hydrogen storage alloy in Example 4 at 80°C is shown in FIG. 2, as a typical PCT characteristic diagram of the hydrogen storage alloy in the present invention. In FIG. 2, A denotes a hydrogen solid solution region, B denotes a plateau region, b1 denotes a first plateau region, b2 denotes a second plateau region, C denotes a hydride region, D denotes a hydrogen pressure Pd1 (0.044 MPa, a pressure at a hydrogen storage amount of 0.25 times the effective hydrogen storage amount (H/M = 0.21)), E denotes a hydrogen pressure Pd2 (0.210 MPa, a pressure at a hydrogen storage amount of 0.70 times the effective hydrogen storage amount (H/M = 0.58)), F denotes the effective hydrogen storage amount (H/M = 0.83), and G denotes an inflection point (0.42 times the effective hydrogen storage amount (H/M = 0.36)).

### (Comparative Example 1)

A nickel-hydrogen secondary battery was made in the same way as Example 1 (Reference), except that the composition of the hydrogen storage alloy was (La_{0.20}SM_{0.80})₀.₉₇Mg₀.₀₃Ni₃.₃₃Al₀._{17.}

### (Comparative Example 2)

A nickel-hydrogen secondary battery was made in the same way as Example 1 (Reference), except that the composition of the hydrogen storage alloy was (La₀.₂₀Sm₀.₈₀) ₀.₈₅Mg₀.₁₅Ni₃.₁₀Al₀.₂₀.

### (Comparative Example 3)

A nickel-hydrogen secondary battery was made in the same way as Example 1 (Reference), except that the composition of the hydrogen storage alloy was (La_{0.20}Nd_{0.40}Sm_{0.40})_{0.90}Mg_{0.10}Ni_{3.33}Al_{0.17} .

### 2. Evaluation of Nickel-Hydrogen Secondary Battery

### (1) Cycle Life Characteristic

The batteries in Examples 1-4 (wherein Examples 1 to 3 are Reference Examples) and Comparative Examples 1-3, after the initial activation treatment, were charged by a so-called -ΔV control in which the charge was performed at 1.0 It until the battery voltage decreased to 10 mV after reaching the maximum value, under an environment of 25°C, and then, were left for 1 hour.

The batteries were discharged at 1.0 It until the battery voltage became 1.0 V, under the same environment, and then, were left for 1 hour.

The cycle of the above charge and discharge is one cycle. Here, the discharge capacity in the first cycle was evaluated, and the discharge capacity at this time was adopted as an initial capacity. Then, for each battery, the cycle of the above charge and discharge was repeated, and the capacity in each cycle was evaluated. Then, when it was assumed that the initial capacity was 100%, the number of cycles until the capacity in each cycle fell below 60% of the initial capacity was counted, and the number was adopted as a cycle life. Here, it was assumed that the number of cycles when the battery in Example 1 (Reference) reached the cycle life was 100, and the ratio of the cycle life of each battery was evaluated. In Table 2, the result is shown as cycle life characteristic. A larger value of the cycle life characteristic means a better cycle life characteristic.

**[Table 1]**

| | Composition of hydrogen storage alloy |
|---|---|
| Example 1^{*} | (La_{0.20}Sm_{0.80}) _{0.99}Mg_{0.01}Ni_{3.25}Al_{0.25} |
| Example 2^{*} | Sm_{0.99}Mg_{0.01}Ni_{3.25}Al_{0.25} |
| Example 3^{*} | Sm₁.₀₀Ni₃.₂₃Al₀.₂₇ |
| Example 4 | (La_{0.20}SM_{0.80}) ₀.₉₈Mg₀.₀₂Ni₃.₂₄Al₀.₂₅Cr₀.₀₁ |
| Comparative Example 1 | (La_{0.20}SM_{0.80}) ₀.₉₇Mg₀.₀₃Ni₃.₃₃Al₀.ₗ₇ |
| Comparative Example 2 | (La_{0.20}SM_{0.80}) ₀.₈₅Mg₀.₁₅Ni₃.₁₀A1₀.₂₀ |
| Comparative Example 3 | (La₀.₂₀Nd₀.₄₀Sm₀.₄₀) ο.9oMg₀.₁₀Ni₃.₃₃Al₀.₁₇ |

| | |
|---|---|
| **^{*}Reference Examples not included within the scope of the present invention** | |

**[Table 2]**

| | Form of PCT Characteristic Diagram | Pd1 [MPa] | Pd2 [MPa] | log₁₀ (Pd2/Pd1) | Discharge Voltage Difference DOD25%-DOD75% [V] | Cycle Life Characteristic [%] |
|---|---|---|---|---|---|---|
| Example 1^{*} | two steps | 0.048 | 0.220 | 0.66 | 0.047 | 100 |
| Example 2^{*} | two steps | 0.086 | 0.390 | 0.66 | 0.046 | 113 |
| Example 3^{*} | two steps | 0.066 | 0.340 | 0.71 | 0.048 | 110 |
| Example 4 | two steps | 0.044 | 0.210 | 0.68 | 0.047 | 113 |
| Comparative Example 1 | two steps | 0.090 | 0.340 | 0.58 | 0.035 | 92 |
| Comparative Example 2 | one step | 0.080 | 0.200 | 0.40 | 0.037 | 78 |
| Comparative Example 3 | one step | 0.066 | 0.140 | 0.33 | 0.028 | 112 |

| | | | | | | |
|---|---|---|---|---|---|---|
| ^{*}Reference Examples not included within the scope of the present invention | | | | | | |

### (2) Consideration

(i) In the batteries in Examples 1-4 (wherein Examples 1 to 3 are Reference Examples), the cycle life characteristic is 100-113%, and it is found that the cycle life characteristic is excellent. Further, in the batteries in Examples 1-4 (wherein Examples 1 to 3 are Reference Examples), the discharge voltage difference is 0.046-0.048 V, and is at a level that allows an easy detection of the remaining capacity of the battery. That is, it was confirmed that the batteries in Examples 1-4 (wherein Examples 1 to 3 are Reference Examples) could generate a discharge voltage difference that was sufficient to easily detect the remaining capacity of the battery and had a good life characteristic.
(ii) In contrast, in the battery in Comparative Example 1 (Reference), although the battery uses the hydrogen storage alloy having the plateau region with two steps in the form of the PCT characteristic diagram, the pressure difference between Pd1 and Pd2 is small, and corresponding to this, the discharge voltage difference is as small as 0.035 V. Therefore, the detection of the remaining capacity of the battery is difficult. In addition, the cycle life characteristic is as low as 92%, and the cycle life characteristic is inferior to those of the batteries in Examples 1-4 (wherein Examples 1 to 3 are Reference Examples).
(iii) In the battery in Comparative Example 2, since the battery uses the hydrogen storage alloy having the plateau region with one step in the form of the PCT characteristic diagram, the pressure difference between Pd1 and Pd2 is small, and corresponding to this, the discharge voltage difference is as small as 0.037 V. Therefore, the detection of the remaining capacity of the battery is difficult. In addition, the cycle life characteristic is as low as 78%, and the cycle life characteristic is considerably inferior to those of the batteries in Examples 1-4 (wherein Examples 1 to 3 are Reference Examples).
(iv) In the battery in Comparative Example 3, the cycle life characteristic is as high as 112%, and the battery has a good cycle life characteristic equivalent to those of the batteries in Examples 1-4 (wherein Examples 1 to 3 are Reference Examples). However, since the battery uses the hydrogen storage alloy having the plateau region with one step in the form of the PCT characteristic diagram, the pressure difference between Pd1 and Pd2 is small, and corresponding to this, the discharge voltage difference is as extremely small as 0.028 V. Therefore, the detection of the remaining capacity of the battery is difficult. That is, both an easy detection of the remaining capacity of the battery and a long cycle life are not achieved.
(v) Thus, it can be said that the present invention can provide the hydrogen storage alloy for the nickel-hydrogen secondary battery that makes it possible to easily detect the remaining capacity of the battery and that contributes to the achievement of the enhancement of the cycle life characteristic, and the negative electrode using the hydrogen storage alloy. Further, the nickel-hydrogen secondary battery that uses the negative electrode containing the hydrogen storage alloy according to the present invention is an excellent battery that achieves both a long cycle life and an easy detection of the remaining capacity of the battery.

The present invention is not limited to the above embodiments and examples, and various modifications can be made within the scope of appended claims. For example, the nickel-hydrogen secondary battery may be a square battery, and the mechanical structure is not particularly limited.

### Explanation of Reference Signs

- 2: nickel-hydrogen secondary battery
- 22: electrode group
- 24: positive electrode
- 26: negative electrode
- 28: separator

## Claims

1. A hydrogen storage alloy having a crystal structure in which an AB₂ type unit and an AB₅ type unit are laminated,
a characteristic diagram including a hydrogen solid solution region, a hydride region, a first plateau region and a second plateau region,
the characteristic diagram indicating a relation between a hydrogen storage amount and a hydrogen pressure at 80°C,
the hydrogen solid solution region being a region in which the hydrogen pressure changes at a first slope with respect to change in the hydrogen storage amount,
the hydride region being a region in which the hydrogen pressure changes at a second slope with respect to the change in the hydrogen storage amount,
the first plateau region being a region in which the hydrogen pressure changes at a smaller slope than the first slope and the second slope with respect to the change in the hydrogen storage amount and that has a hydrogen pressure Pd1 when hydrogen is stored by 0.25 times an effective hydrogen storage amount that is a hydrogen storage amount when the hydrogen pressure is 1 MPa,
the second plateau region being a region in which the hydrogen pressure changes at a smaller slope than the first slope and the second slope with respect to the change in the hydrogen storage amount and that has a hydrogen pressure Pd2 when the hydrogen is stored by 0.70 times the effective hydrogen storage amount that is the hydrogen storage amount when the hydrogen pressure is 1 MPa,
the hydrogen pressure Pd1 and the hydrogen pressure Pd2 satisfying a relation of 0.6 ≤ log₁₀ (d2/Pd1), wherein the hydrogen storage alloy has a composition expressed by a general formula: Ln₁₋ₓMgₓNi_{y-z-α}Al_{z}M_{α} (in the formula, Ln represents at least one element selected from the group consisting of Zr and rare earth elements, M represents at least one element selected from the group consisting of V, Nb, Ta, Cr, Mo, Fe, Ga, Zn, Sn, In, Cu, Si, P and B, and suffixes x, y, z and α satisfy relations of 0 ≤ x < 0.03, 3.3 ≤ y ≤ 3.6, 0.2 ≤ z ≤ 0.4 and 0 < α ≤ 0.1, respectively).

2. The hydrogen storage alloy according to claim 1, wherein an inflection point between the first plateau region and the second plateau region is at a position corresponding to 0.35-0.50 times the effective hydrogen storage amount.

3. The hydrogen storage alloy according to claim 1 or 2, wherein the first plateau region is positioned on a low-pressure side and the second plateau region is positioned on a high-pressure side.

4. The hydrogen storage alloy according to any of claims 1 to 3, wherein the crystal structure is a Ce₂Ni₇ type.

5. A negative electrode for a nickel-hydrogen secondary battery, the negative electrode comprising:
a negative electrode core body; and
a negative electrode mixture that is held by the negative electrode core body,
the negative electrode mixture containing the hydrogen storage alloy according to any of claims 1 to 4.

6. A nickel-hydrogen secondary battery comprising: an outer can; and an electrode group that is placed in the outer can in a sealed condition together with an alkaline electrolyte,
the electrode group including a positive electrode and a negative electrode that are overlapped with a separator therebetween,
the negative electrode being the negative electrode according to claim 5.

## Patentansprüche

1. Wasserstoffspeicherlegierung mit einer Kristallstruktur, in der eine Einheit des Typs AB₂ und eine Einheit des Typs AB₅ laminiert sind,
ein charakteristisches Diagramm einen Wasserstofffeststofflösungsbereich, einen Hydridbereich, einen ersten Plateaubereich und einen zweiten Plateaubereich aufweist,
das charakteristische Diagramm eine Beziehung zwischen einer Wasserstoffspeichermenge und einem Wasserstoffdruck bei 80°C angibt,
der Wasserstofffeststofflösungsbereich ein Bereich ist, in dem sich der Wasserstoffdruck in einem ersten Gefälle im Hinblick auf eine Änderung in der Wasserstoffspeichermenge verändert,
der Hydridbereich ein Bereich ist, in dem sich der Wasserstoffdruck in einem zweiten Gefälle im Hinblick auf eine Änderung in der Wasserstoffspeichermenge verändert,
der erste Plateaubereich ein Bereich ist, in dem sich der Wasserstoffdruck in einem kleineren Gefälle als das erste Gefälle und das zweite Gefälle im Hinblick auf eine Änderung in der Wasserstoffspeichermenge verändert, und einen Wasserstoffdruck Pd1 hat, wenn Wasserstoff um das 0,25-fache einer effektiven Wasserstoffspeichermenge gespeichert wird, die eine Wasserstoffspeichermenge ist, wenn der Wasserstoffdruck 1 MPa beträgt,
der zweite Plateaubereich ein Bereich ist, in dem sich der Wasserstoffdruck in einem kleineren Gefälle als das erste Gefälle und das zweite Gefälle im Hinblick auf eine Änderung in der Wasserstoffspeichermenge verändert, und einen Wasserstoffdruck Pd2 hat, wenn Wasserstoff um das 0,70-fache der effektiven Wasserstoffspeichermenge gespeichert wird, die eine Wasserstoffspeichermenge ist, wenn der Wasserstoffdruck 1 MPa beträgt,
der Wasserstoffdruck Pd1 und der Wasserstoffdruck Pd2 eine Beziehung 0,6 ≤ log₁₀ (Pd2/Pd1) erfüllen,
wobei die Wasserstoffspeicherlegierung eine Zusammensetzung hat, die durch eine allgemeine Formel ausgedrückt wird: Ln₁₋ₓMgₓNi_{y-z-α}Al_{z}M_{α} (wobei in der Formel Ln mindestens ein Element darstellt, das aus der Gruppe ausgewählt ist, die aus Zr und Seltenerdelementen besteht, M mindestens ein Element darstellt, das aus der Gruppe ausgewählt ist, die aus V, Nb, Ta, Cr, Mo, Fe, Ga, Zn, Sn, In, Cu, Si, P und B besteht, und Suffixe x, y, z und α jeweils Verhältnisse 0 ≤ x < 0,03, 3,3 ≤ y ≤ 3,6, 0,2 ≤ z ≤ 0,4 und 0 < α ≤ 0,1 erfüllen).

2. Wasserstoffspeicherlegierung nach Anspruch 1, wobei sich ein Wendepunkt zwischen dem ersten Plateaubereich und dem zweiten Plateaubereich an einer Position befindet, die dem 0,35- bis 0,50-fachen der effektiven Wasserstoffspeichermenge entspricht.

3. Wasserstoffspeicherlegierung nach Anspruch 1 oder 2, wobei sich der erste Plateaubereich auf einer Niederdruckseite befindet, und sich der zweite Plateaubereich auf einer Hochdruckseite befindet.

4. Wasserstoffspeicherlegierung nach einem der Ansprüche 1 bis 3, wobei die Kristallstruktur vom Typ Ce₂Ni₇ ist.

5. Negative Elektrode für eine Nickel-Wasserstoff-Sekundärbatterie, wobei die negative Elektrode umfasst:
einen negativen Elektrodenkernkörper; und
ein negatives Elektrodengemisch, das durch den negativen Elektrodenkernkörper vorgehalten wird,
wobei das negative Elektrodengemisch die Wasserstoffspeicherlegierung nach einem der Ansprüche 1 bis 4 enthält.

6. Nickel-Wasserstoff-Sekundärbatterie, umfassend: eine äußere Dose; und eine Elektrodengruppe, die in die äußere Dose in einem abgedichteten Zustand zusammen mit einem alkalischen Elektrolyten eingesetzt ist,
wobei die Elektrodengruppe eine positive Elektrode und eine negative Elektrode aufweist, die mit einem dazwischenliegenden Separator überlagert sind,
wobei es sich bei der negativen Elektrode um die negative Elektrode nach Anspruch 5 handelt.

## Revendications

1. Alliage à stockage d'hydrogène présentant une structure cristalline dans laquelle une unité de type AB₂ et une unité de type AB₅ sont stratifiées,
un diagramme caractéristique incluant une région de solution solide d'hydrogène, une région hybride, une première région de plateau et une deuxième région de plateau,
le diagramme caractéristique indiquant un rapport entre une quantité de stockage d'hydrogène et une pression d'hydrogène à 80 °C,
la région de solution solide d'hydrogène étant une région dans laquelle la pression d'hydrogène change selon une première pente par rapport à un changement dans la quantité de stockage d'hydrogène,
la région hybride étant une région dans laquelle la pression d'hydrogène change selon une deuxième pente par rapport au changement dans la quantité de stockage d'hydrogène,
la première région de plateau étant une région dans laquelle la pression d'hydrogène change selon une pente plus petite que la première pente et la deuxième pente par rapport au changement dans la quantité de stockage d'hydrogène et qui a une pression d'hydrogène Pd1 lorsque de l'hydrogène est occlus à raison de 0,25 fois une quantité de stockage d'hydrogène efficace qui est une quantité de stockage d'hydrogène présente lorsque la pression d'hydrogène est de 1 MPa,
la deuxième région de plateau étant une région dans laquelle la pression d'hydrogène change selon une pente plus petite que la première pente et la deuxième pente par rapport au changement dans la quantité de stockage d'hydrogène et qui a une pression d'hydrogène Pd2 lorsque l'hydrogène est occlus à raison de 0,70 fois la quantité de stockage d'hydrogène efficace qui est la quantité de stockage d'hydrogène présente lorsque la pression d'hydrogène est de 1 MPa,
la pression d'hydrogène Pd1 et la pression d'hydrogène Pd2 satisfaisant à un rapport de 0,6 ≤ logio(Pd2/Pdl), sachant que l'alliage à stockage d'hydrogène a une composition exprimée par une formule générale : Ln₁₋ₓMgₓNi_{y-z-α}Al_{z}M_{α} (sachant que dans la formule, Ln représente au moins un élément sélectionné dans le groupe constitué par Zr et les éléments de terres rares, M représente au moins un élément sélectionné dans le groupe constitué par V, Nb, Ta, Cr, Mo, Fe, Ga, Zn, Sn, In, Cu, Si, P et B, et les suffixes x, y, z et α satisfont à des rapports de 0 ≤ x < 0,03, 3,3 ≤ y ≤ 3,6, 0,2 ≤ z ≤ 0,4 et 0 < α ≤ 0,1, respectivement).

2. L'alliage à stockage d'hydrogène selon la revendication 1, sachant qu'un point d'inflexion entre la première région de plateau et la deuxième région de plateau se situe à une position correspondant à 0,35 à 0,50 fois la quantité de stockage d'hydrogène efficace.

3. L'alliage à stockage d'hydrogène selon la revendication 1 ou 2, sachant que la première région de plateau est positionnée d'un côté basse pression et la deuxième région de plateau est positionnée d'un côté haute pression.

4. L'alliage à stockage d'hydrogène selon l'une quelconque des revendications 1 à 3, sachant que la structure cristalline est de type Ce₂Ni₇.

5. Électrode négative pour une batterie rechargeable au nickel-hydrogène, l'électrode négative comprenant :
un corps d'âme d'électrode négative ; et
un mélange d'électrode négative qui est maintenu par le corps d'âme d'électrode négative,
le mélange d'électrode négative contenant l'alliage à stockage d'hydrogène selon l'une quelconque des revendications 1 à 4.

6. Batterie rechargeable au nickel-hydrogène comprenant : un boîtier extérieur ; et un groupe d'électrodes qui est placé dans le boîtier extérieur dans un état scellé conjointement avec un électrolyte alcalin,
le groupe d'électrodes incluant une électrode positive et une électrode négative qui sont recouvertes par un séparateur entre elles,
l'électrode négative étant l'électrode négative selon la revendication 5.
